# EUROPÄISCHE PATENTSCHRIFT

(11) **EP 1 510 120 B1**
(45) Veröffentlichungstag und Bekanntmachung des Hinweises auf die Patenterteilung: **14.02.2007**
(21) Anmeldenummer: 04450159.1
(22) Anmeldetag: 05.08.2004
(51) Int. Cl.: A01B 71/06, A01D 34/66

(54) **Zapfwellengetriebenes landwirtschaftliches Arbeitsgerät**
Agricultural implement driven by the power take-off
Outil agricole commandé par un arbre de prise de force

(30) Priorität: 26.08.2003 AT 13392003
(43) Veröffentlichungstag der Anmeldung: 02.03.2005
(73) Patentinhaber: REFORM-WERKE BAUER & CO. GESELLSCHAFT M.B.H., A-4600 Wels (AT)
(72) Erfinder: Gattermair, Gerhard, 4710 Schlüsselberg (AT)
(74) Vertreter: Itze, Peter

(56) Entgegenhaltungen:
- EP-A- 1 400 160
- DE-A- 4 407 812
- DE-B- 1 052 143
- DE-U- 20 308 056
- US-A1- 2003 146 006

## Beschreibung

Die Erfindung betrifft ein zapfwellengetriebenes landwirtschaftliches Arbeitsgerät mit einem Tragrahmen aus zwei um eine in Fahrtrichtung verlaufende Achse zueinander schwenkbar gelagerten Rahmenteilen, von welchen der erste Rahmenteil zum Anschluß an das Hubwerk eines Trägerfahrzeuges vorgesehen ist und der zweite Rahmenteil die für den jeweiligen Arbeitseinsatz erforderlichen Arbeitswerkzeuge sowie deren Antrieb aufweist.

Derartige Arbeitsgeräte sind für verschiedenste landwirtschaftliche Aufgaben einsetzbar wie z.B. als Mähwerk, Bandrechen oder sonstige Heuernte-Geräte, wobei wesentlich ist, daß das Arbeitsgerät im Bezug auf das Trägerfahrzeug um eine in Fahrtrichtung verlaufende Achse verschwenkbar sein soll. Der Anbau erfolgt üblicherweise an ein Hubwerk und der Antrieb deren Arbeitsgeräte mittels einer Zapf- und Gelenkwelle an der Front- oder Heckseite eines Trägerfahrzeuges.

Die genannte zweiteilige Ausbildung des Tragrahmens des Arbeitsgerätes ermöglicht eine günstige Bodenanpassung der Arbeitswerkzeuge im Gelände mit wechselnden Neigungswinkeln.

Ein derartiges Arbeitsgerät ist in der CH 692 564 A5 beschrieben, und zwar handelt es sich dort um ein Rotationsmähwerk, bei welchem mehrere Arbeitswerkzeuge quer zur Fahrtrichtung nebeneinander angeordnet und über eine nicht weiter dargestellte Antriebsachse angetrieben sind. Der Antrieb zwischen Zugfahrzeug und Arbeitswerkzeugen ist ebenfalls nicht näher dargestellt. Der aus dieser Druckschrift bekannte Anbaurahmen besitzt zwei Rahmenteile, die zueinander um eine in Fahrtrichtung verlaufende Achse pendelnd gelagert sind. Der am Tragfahrzeug angebrachte Rahmenteil übergreift den anderen an ihm angelenkten Rahmenteil, wobei die Lagerung zwischen den beiden Rahmenteilen in Fahrtrichtung des Arbeitsgerätes vor den eigentlichen Arbeitswerkzeugen angeordnet ist, so daß die Arbeitswerkzeuge über die zu bearbeitende Bodenfläche "gezogen" werden. Aufgrund dieser Bauweise ist es auch erforderlich, daß der mit dem Trägerfahrzeug verbundene Rahmenteil des Arbeitsgerätes über die Antriebseinrichtung für die Arbeitswerkzeuge ragend ausgebildet sein muß, da unterhalb dieses die Arbeitswerkzeuge übergreifenden Teiles die gesamte Antriebseinrichtung unterzubringen ist. Dies gibt damit einen sowohl bezüglich der Höhe als auch bezüglich der Länge aufwendigen Rahmen des Arbeitsgerätes.

Aus DE 41 37 717 C2 geht ein landwirtschaftliches Arbeitsgerät vor, welches ebenfalls einen zweiteiligen Tragrahmen besitzt, bei welchem der die Arbeitswerkzeuge tragende Rahmenteil pendelnd an dem am Trägerfahrzeug angebrachten Rahmen aufgehängt ist, wobei allerdings ein mittiges Gelenk vorgesehen ist, dessen Achse quer zur Fahrtrichtung parallel zum Rahmen der Arbeitswerkzeuge verläuft, wobei dieses Gelenk als Kugelgelenk ausgebildet ist, und somit eine pendelnde Anlenkung um eine virtuelle in Fahrtrichtung verlaufende Achse ermöglicht. Zur Fixierung der beiden Rahmenteile zueinander sind weiters Gelenkstangen vorgesehen, die ebenfalls über Kugelgelenke an den beiden Rahmenteilen angelenkt sind. Diese Gelenkstangen dienen dazu, die Winkeleinstellung zwischen dem die Arbeitsgeräte tragenden Rahmenteil zu dem am Trägerfahrzeug angeordneten Rahmenteil zu fixieren. Der Antrieb des Rotationsmähwerkes erfolgt dabei durch eine unterhalb des am Tragrahmen angebrachten Rahmenteils mittels einer durchgeführten Gelenkwelle auf die Antriebswellen des Mähwerkes. Das die beiden Rahmenteile miteinander verbindende Gelenk ist ebenfalls in Fahrtrichtung vor den Arbeitswerkzeugen angeordnet, wobei der am Trägerfahrzeug angebrachte Rahmenteil den die Arbeitsgeräte tragenden Rahmenteil übergreift.

Aus DE 3628 605 A1 geht hervor, an einem mit dem Ackerschlepper zu verbindenden Tragebock seitlich auskragende Arbeitseinheiten um je eine horizontale Achse hochschwenkbar zu lagern. Der Tragebock selbst ist dabei am Ackerschlepper starr befestigt. Der Zweck dieser bekannten Ausbildung liegt darin, einen verminderten Raumbedarf beim Straßentransport zu erzielen. Von einer Anpassbarkeit der Arbeitseinheiten, bzw. der die Arbeitswerkzeuge tragenden Rahmenteile an eine Hangneigung oder dergleichen, ist in der Druckschrift nichts angeführt. Weiters ist jener Teil, der direkt an die Zapfwelle des Ackerschleppers anzuschließen ist, mit dem Ackerschlepper starr verbunden. Die aus der Druckschrift entnehmbare koaxiale Lagerung von einer angetriebenen Welle und den hochschwenkbaren seitlichen Arbeitseinheiten ermöglicht lediglich ein einfaches Hochschwenken dieser Arbeitseinheiten für den Straßentransport.

Aus DE 3612 322 A1 geht eine Schnellkupplung hervor mit welcher ein selbsttätiger Anschluß landwirtschaftlicher Arbeitsmaschinen an die Lenker der Schlepphydraulik und an den Zapfwellenanschluß eines Schleppers ermöglicht ist. Über eine spezielle lagemäßige Anordnung der Schnellkupplung in bezug auf die Rahmenteile des Arbeitsgerätes ist nichts ausgesagt.

Die DE 4407 812 A1 offenbart ein Doppelkegelgetriebe über welches Arbeitswerkzeuge antreibbar sind, wobei auf Grund der gegenläufigen Abtriebswellen möglich ist, durch Umlegen des Antriebsriemens vom Riemenrad einer Welle auf jenes der anderen Welle die Drehrichtung der Arbeitswerkzeuge zu wechseln.

Bei den vorgenannten bekannten Ausführungen tritt der Nachteil auf, daß die Schwenkachse zwischen den beiden Rahmenteilen in relativ großen Abstand zum Boden angeordnet ist, wodurch eine verschlechterte Bodenanpassung des Arbeitsgerätes bedingt ist, und weiters, daß durch die Art der Schwenklagerungen nur eingeschränkte Möglichkeiten der Anordnung des Antriebes vom Trägerfahrzeug zu den Arbeitswerkzeugen gegeben sind.

Aus der US 2003/0146006 A1 geht eine Aufhängung für ein zapfwellengetriebenes landwirtschaftliches Arbeitsgerät hervor, bei welchem der Tragrahmen aus zwei zueinander um eine in Fahrtrichtung verlaufende Achse verschwenkbaren Teilen besteht, wobei die Achse des Anschlußzapfens für die Zapfwelle am Arbeitsgerät koaxial zur Schwenkachse der beiden Rahmenteile verläuft. Der Antrieb der Werkzeuge des Arbeitsgerätes erfolgt über ein nicht näher definiertes von der Zapfwelle getriebenes Verteilergetriebe, von welchem für den Antrieb der Werkzeuge seitlich je eine Welle herausführt.

Dies EP 1400 160 A1 offenbart eine Pendelvorrichtung für eine Feldbearbeitungsmaschine, wobei zwei zueinander gesteuert verschwenkbare Rahmenteile vorgesehen sind, deren rohrförmige Schwenkachse als Durchführung für die Antriebswelle der Feldbearbeitungsmaschine dient; ein Verteilergetriebe oder dergleichen ist nicht vorgesehen.

Der Erfindung liegt die Aufgabe zugrunde einen möglichst geringe Abmessungen aufweisenden Antrieb der sich gegensinnig drehenden Arbeitswerkzeuge zu erreichen.

Erfindungsgemäß wird diese Aufgabe durch die Merkmale des Anspruches 1 gelöst. Dieser auch Dualantrieb genannte Doppelkegeltrieb führt auf Grund der gleichzeitigen Kraftabnahme in beiden Drehrichtungen zu einer Aufteilung der Antriebsmomente und erlaubt somit eine Verkleinerung der Antriebselemente wie Doppelkegelräder, koaxiale Antriebwellen und nachfolgende Elemente, wodurch praktisch keine Einschränkungen im eigentliche Arbeitsbereich, also z.B. im Mähteil, in Kauf genommen werden müssen. Dies auch deshalb, weil auf Grund der die Arbeitswerkzeuge direkt antreibenden Treibwelle der eigentliche Arbeitsteil des Arbeitsgerätes flach gehalten werden kann, wodurch z.B. der Abfluß von Mähgut nicht behindert wird. Außerdem wird erreicht, daß trotz Verschwenkens der Rahmenteile immer alle Arbeitswerkzeuge gleichmäßig angetrieben sind. Weiters wird eine Reduktion und Vergleichmäßigung der Lagerkräfte und der Belastungen im Getriebegehäuse erreicht. Schließlich werden die gegensinnigen Drehrichtungen der koaxial angeordneten Antriebswellen direkt erzielt, was sich vorteilhaft auf die bereits genannte Verringerung der Dimensionierung der weiteren Antriebselemente bei gegensinnig drehenden Arbeitswerkzeugen auswirkt.

Vorteilhafterweise kann die zur Verbindung zwischen Zapfwelle und Antriebswelle vorgesehene Gelenkwelle mit der Antriebswelle mittels einer Schnellverschlußverbindung gekoppelt sein, wobei auch der die Antriebswelle aufnehmende Teil der gegenseitigen Lagerung der zueinander schwenkbaren Rahmenteile als Hohlkörper ausgebildet ist und die Schnellverschlußverbindung aufnimmt. Dies ermöglicht eine großzügige Dimensionierung der Lagerung und ergibt einen optimalen Schutz der Schnellverschlußverbindung, wobei die erfindungsgemäße Lagerung Schnellverschlußverbindungen jeglicher Art aufnimmt und wobei eine Zentralpendelung erreicht wird, d.h. es werden Längen- und Winkeländerungen der Gelenkwelle durch Bewegen des Arbeitsgerätes in Folge notwendiger Bodenanpassungen während des Arbeitsvorganges vermieden, da die Ausrichtung der Lagerung der Antriebswelle im Rahmen im Bezug auf das Trägerfahrzeug immer unverändert bleibt.

In der Zeichnung ist ein Ausführungsbeispiel des Erfindungsgegenstandes dargestellt.

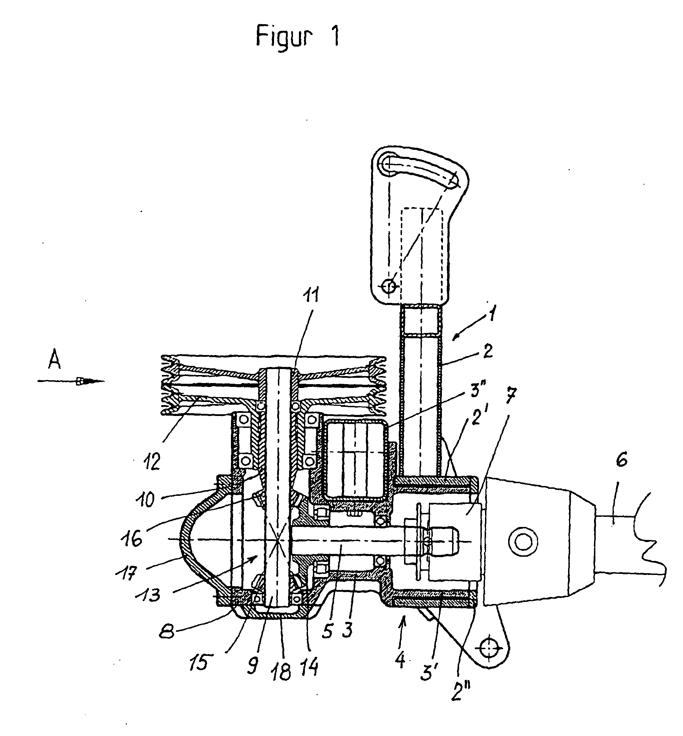

Fig.1 zeigt den Erfindungsgegenstand in einem in Fahrtrichtung verlaufenden Vertikalschnitt nach Linie I - I der Fig. 2, wobei die Arbeitswerkzeuge weggelassen sind.
Fig. 2 ist eine Stimansicht des gesamten Arbeitsgerätes in Richtung des Pfeiles A der Fig. 1 gesehen.
Fig. 3 ist eine Detaildarstellung der weiteren Antriebselemente für die Arbeitswerkzeuge.

Mit 1 ist ein Tragrahmen bezeichnet, der aus zwei Rahmenteilen 2 und 3 besteht, von welchen der eine Rahmenteil 2 zum Anschluß an das Hubwerk eines Trägerfahrzeuges vorgesehen ist und der zweite Rahmenteil 3 die für den Arbeitseinsatz erforderlichen Arbeitswerkzeuge 25 bis 29 trägt. Die beiden Rahmenteile 2,3 sind gegeneinander um eine Lagerung 4 verschwenkbar, wobei die Achse der Lagerung 4 in Fahrtrichtung des gesamten Arbeitsgerätes verläuft. Für diese Lagerung 4 weist sowohl der Rahmenteil 2 als auch der Rahmenteil 3 einen rohrartigen Fortsatz 2' 3' auf, die koaxial ineinander greifen. Diese beiden rohrartigen Fortsätze 2' 3' sind durch eine Sicherung 2" gegen Abrutschen gesichert. Am Rahmenteil 3 ist noch ein Querbalken 3" vorgesehen, der in weiterer Folge die Arbeitswerkzeuge 25 bis 29 trägt.

Koaxial zu den rohrartigen Fortsätzen 2', 3' der Rahmenteile 2,3 ist durch die Fortsätze 2', 3' hindurchgehend eine Antriebswelle 5 gelagert, welche über eine Gelenkswelle 6 mit der Zapfwelle des Trägerfahrzeuges in Verbindung gebracht werden kann. Die Gelenkwelle 6 ist an der Antriebswelle 5 über eine Schnellverschlußverbindung 7 verbunden, wobei diese Schnellverschlußverbindung 7 innerhalb der die Lagerung 4 bildenden rohrartigen Fortsätze 2' 3' angeordnet ist. Dies ergibt einen wirksamen Schutz der Schnellverschlußverbindung 7 einerseits gegen unbeabsichtigtes Lösen und andererseits auch gegen Verschmutzung oder Beschädigung. Eine derartige Schnellverschlußverbindung 7 kann beispielsweise als Aufsteckgabel mit Schiebestift oder mit axialem Ziehverschluß ausgebildet sein. Derartige Kupplungen sind handelsüblich und werden daher nicht weiter im Detail beschrieben. Gleiches gilt auch für die Aufhängung des Rahmenteils 2 an einem Hubwerk des Trägerfahrzeuges, wobei in der Zeichnung die Anlenkpunkte für ein herkömmliches Dreipunkt - Hubwerk schematisch dargestellt sind. Der Rahmenteil 3 weist weiters ein Getriebegehäuse 8 auf, in welches die Antriebswelle 5 mit ihrem der Schnellverschlußverbindung 7 abgewandten Ende hineinragt. In diesem Getriebegehäuse sind zusätzlich Abtriebswellen 9,10 gelagert, die zueinander koaxial vorgesehen sind, wobei die Abtriebswelle 9 die Abtriebswelle 10 durchsetzt. Beide Antriebswellen 9,10 stehen im rechten Winkel zur Antriebswelle 5. Die Abtriebswellen 9,10 sind mit Antriebsorganen für den Antrieb der Arbeitswerkzeuge 25,26 versehen und zwar vorliegend mit Riemenscheiben 11,12. Der Antrieb der Abtriebswellen 9,10 ist als Dualantrieb 13 ausgebildet, zu welchem Zweck an dem in das Getriebegehäuse 8 ragenden Ende der Antriebswelle 5 ein Kegelrad 14 vorgesehen ist, das mit seinen diametral gegenüberliegenden Bereichen mit Kegelrädern 15,16 kämmt, von denen das eine Kegelrad 15 mit der Abtriebswelle 9 und das andere Kegelrad 16 mit der Abtriebswelle 10 drehschlüssig verbunden ist. Damit wird erreicht, daß die Abtriebswellen 9 und 10 gegenläufig zueinander angetrieben sind, und damit auch die beiden Riemenscheiben 11,12 zueinander gegenläufig bewegt werden. Mit 17 und 18 sind Deckel des Getriebegehäuses 8 bezeichnet, die die entsprechende Zugänglichkeit zu den diversen nicht näher beschriebenen jedoch dargestellten Lagern und Befestigungen ermöglichen.

Zum Antrieb der Arbeitswerkzeuge 25 bis 29 sind über die Riemenscheiben 11,12 mittels je eines oder je mehreren Riemen Riemenscheiben 19,20 antreibbar, die auf den Antriebswellen 21,22 sitzen, welche mittels Lager 23,24 am Querbalken 3" des Rahmenteils 3 gelagert sind. Der Antrieb der Werkzeuge 25 bis 29 erfolgt derart, daß an der direkt mit dem Arbeitswerkzeug 25 angreifenden Antriebswelle 21 ein Kegeltrieb 30 und an der am Arbeitswerkzeug 26 angreifenden Antriebswelle 22 ein Kegeltrieb 31 vorgesehen ist, welche beide eine Treibwelle 32 antreiben, die im bodennahen Bereich des Arbeitsgerätes an diesem gelagert ist. An dieser Treibwelle 32 sind weitere Kegeltriebe 33,34,35 für die zusätzlichen Arbeitswerkzeuge 27,28,29 angeordnet. Aufgrund der Anordnung der Kegeltriebe 33,34,35 und des gegenläufigen Antriebes der Antriebswellen 21,22 erfolgt eine entsprechende gegenläufige Bewegung der Arbeitswerkzeuge 25 bis 29.

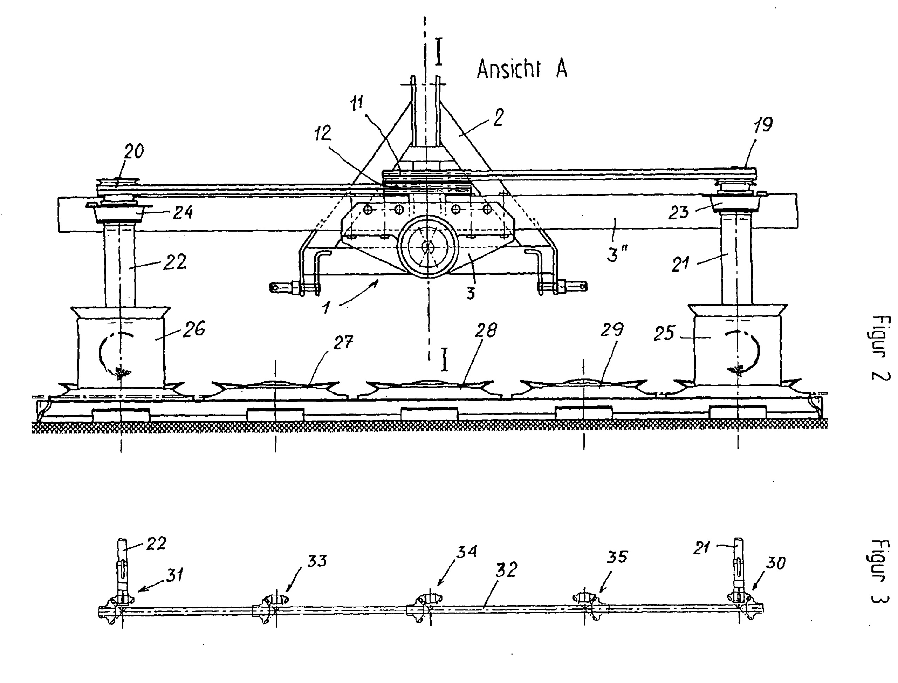

Im Betrieb des Arbeitswerkzeuges können sich auf Grund der Zentralpendelung die beiden Rahmenteile 2,3 gegeneinander um die Lagerung 4 frei verschwenken, wobei in Fig. 2 lediglich die Mittelstellung dargestellt ist. Die Schwenkbewegung kann nach beiden Seiten um wenigstens je 30° erfolgen. Bei diesem gegenseitigen Verschwenken der Rahmenteile 2,3 bleibt die Antriebswelle 5 immer gleich im Mittel der Schwenkbewegung, so daß die Gelenkwelle 6 während des Verschwenkens der beiden Rahmenteile zueinander nicht die Lage wechselt, womit keinerlei zusätzlichen Kräfte auf die Gelenke der Gelenkwelle 6 ausgeübt werden. Auch braucht die Gelenkwelle 6 keinerlei Längenveränderungen oder dergleichen aufnehmen.

## Patentansprüche

1. Zapfwellengetriebenes landwirtschaftliches Arbeitsgerät mit einem Tragrahmen (1) aus zwei um eine in Fahrtrichtung verlaufende Achse zueinander schwenkbar gelagerten Rahmenteilen (2, 3), von welchen der erste Rahmenteil (2) zum Anschluß an das Hubwerk eines Trägerfahrzeuges vorgesehen ist und der zweite Rahmenteil (3), die für den jeweiligen Arbeitseinsatz erforderlichen Arbeitswerkzeuge (25 - 29) sowie deren Antrieb aufweist, wobei am zweiten Rahmenteil (3) zwei oder mehrere, wie z.B. bei einem Rotationsmähwerk, gegensinnig umlaufende Arbeitswerkzeuge (25,26) gelagert sind, wobei die Antriebswelle (5) über einen Doppelkegeltrieb (13) mit je einer von zwei koaxial angeordneten Abtriebswellen (9, 10) zum Antrieb weiterer Antriebselemente (11, 12, 19, 20, 21, 22) für die gegensinnige Drehung der Arbeitswerkzeuge (25, 26) in Eingriff steht, wobei weiters die Lagerung der direkt an die Zapfwelle des Trägerfahrzeuges anzuschließenden Antriebswelle (5) der Arbeitswerkzeuge (25,26) und die gegenseitige Lagerung (4) der zueinander schwenkbaren Rahmenteile (2,3) gleichachsig angeordnet sind und die Antriebselemente (11, 12, 19, 20) als Riemen- oder Kettentriebe ausgeführt sind, und wobei zum Antrieb allfälliger weiterer Arbeitswerkzeuge (27, 28, 29) eine im Arbeitsgerät gelagerte und mit je einem Kegeltrieb (30, 31) für jedes Arbeitswerkzeug (27, 28, 29) versehene Treibwelle (32) vorgesehen ist, die über die weiteren Antriebselemente (33, 34, 35) von den Abtriebswellen (21, 22) antreibbar ist.

2. Zapfwellengetriebenes landwirtschaftliches Arbeitsgerät nach Anspruch 1, wobei die zur Verbindung zwischen Zapfwelle und Antriebswelle (5) vorgesehene Gelenkwelle (6) mit der Antriebswelle (5) mittels einer Schnellverschlußverbindung (7) gekoppelt ist, und wobei auch der die Antriebswelle (5) aufnehmende Teil der gegenseitigen Lagerung (4) der zueinander schwenkbaren Rahmenteile (2,3) als Hohlkörper (2',3') ausgebildet ist und die Schnellverschlußverbindung (7) aufnimmt.

## Claims

1. Agricultural equipment driven by the power take-off gear comprising a supporting frame (1) made from two frame parts (2, 3) mounted so that they can pivot relative to each other about an axis extending in the direction of travel, of which the first frame part (2) is provided for connection to the hoisting equipment of a towing vehicle and the second frame part (3) comprises the necessary work tools (25 - 29) for that particular working use and the drive mechanism thereof, wherein two or more work tools (25, 26) revolving in opposing directions, for example a rotational cutter bar, are mounted on the second frame part (3), the drive shaft (5) meshing with either one of two coaxially positioned output shafts (9, 10) via a double bevel gear (13) for driving further drive elements (11, 12, 19, 20, 21, 22) to rotate the work tools (25, 26) in opposing directions, the bearing of the drive shaft (5) of the work tools (25, 26), which drive shaft is to be connected directly to the power take-off gear of the towing vehicle, and the opposing bearing (4) of the frame parts (2, 3), which can pivot relative to each other, being, moreover, coaxially positioned, and the drive elements (11, 12, 19, 20) being in the form of belt or chain drives, a driving shaft (32), which is mounted in the equipment, is provided with a respective bevel gear (30, 31) for each work tool (27, 28, 29) and can be driven by the drive shafts (21, 22) via the further drive elements (33, 34, 35), being provided for the driving of any further work tools (27, 28, 29).

2. Agricultural equipment driven by the power take-off gear according to claim 1, wherein the articulated shaft (6) provided for connecting the power take-off gear and drive shaft (5) is coupled to the drive shaft (5) by means of a rapid closure connection (7), and wherein also the part of the opposing bearing (4) of the frame parts (2, 3) that receives the drive shaft (5), which frame parts can pivot relative to each other, is in the form of a hollow member (2', 3') and receives the rapid closure connection (7).

## Revendications

1. Engin agricole commandé par un arbre de prise de force, avec un cadre porteur (1) constitué de deux parties de cadre (2, 3) montées pivotantes l'une par rapport à l'autre autour d'un axe orienté dans la direction de déplacement, dont la première partie de cadre (2) est prévue pour le raccordement au mécanisme de levage d'un véhicule porteur et la deuxième partie de cadre (3) présente les outils de travail (25 - 29) nécessaires aux opérations respectives, ainsi que leur entraînement, dans lequel deux ou plusieurs, par exemple dans le cas d'une tondeuse rotative, outils de travail (25, 26) tournant en sens inverse sont montés sur la deuxième partie de cadre (3), l'arbre d'entraînement (5) étant en prise par l'intermédiaire d'un mécanisme à doubles engrenages coniques (13) avec l'un de deux arbres d'entraînement coaxiaux (9, 10) destinés à entraîner d'autres éléments d'entraînement (11, 12, 19, 20, 21, 22) pour la rotation en sens inverse des outils de travail (25, 26), le soutien des arbres d'entraînement (5) des outils de travail (25, 26) se raccordant directement à l'arbre de prise de force du véhicule porteur et le soutien mutuel (4) des parties de cadre (2, 3) pivotantes relativement étant placés coaxialement et les éléments d'entraînement (11, 12, 19, 20) étant réalisés en entraînements à courroie ou à chaîne, et un arbre meneur (32) monté dans l'engin et muni d'un mécanisme à engrenages coniques (30, 31) pour chaque outil de travail (27, 28, 29), étant prévu pour l'entraînement d'autres outils de travail éventuels (27, 28, 29), arbre meneur qui peut être entraîné par les arbres de sortie (21, 22) par l'intermédiaire des autres éléments d'entraînement (33, 34, 35).

2. Engin agricole commandé par un arbre de prise de force selon la revendication 1, dans lequel l'arbre articulé (6) prévu pour la liaison entre l'arbre de prise de force et l'arbre d'entraînement (5) est couplé à l'arbre d'entraînement (5) au moyen d'une liaison à fermeture rapide (7), et dans lequel la partie du soutien mutuel (4) des parties de cadre (2, 3) pivotantes relativement qui reçoit l'arbre d'entraînement (5) est conformée également en corps creux (2', 3') et reçoit la liaison à fermeture rapide (7).
